# EUROPEAN PATENT SPECIFICATION

(11) **EP 3 340 571 B1**
(45) Date of publication and mention of the grant of the patent: **17.05.2023**
(21) Application number: 16205450.6
(22) Date of filing: 20.12.2016
(51) Int. Cl.: H04L 67/12, H04L 69/22, H04L 67/63, H04L 9/40, H04L 67/56

(54) **GATEWAY FOR TRANSMITTING DATA FROM A SOURCE SYSTEM TO A DESTINATION SYSTEM, WITH RULE-BASED FORWARDING AND FURTHER PROCESSING OF DATA, AND METHOD**
GATEWAY ZUR ÜBERTRAGUNG VON DATEN VON EINEM QUELLSYSTEM AN EIN ZIELSYSTEM MIT REGELBASIERTER WEITERLEITUNG UND WEITERVERARBEITUNG VON DATEN SOWIE VERFAHREN
PASSERELLE DE TRANSMISSION DE DONNÉES DEPUIS UN SYSTÈME SOURCE À UN SYSTÈME DE DESTINATION, AVEC RETRANSMISSION FONDÉE SUR DES RÈGLES ET TRAITEMENT ULTÉRIEUR DES DONNÉES ET PROCÉDÉ

(43) Date of publication of application: 27.06.2018
(73) Proprietor: ABB Schweiz AG, 5400 Baden (CH)
(72) Inventor: Goldschmidt, Thomas, 76689 Karlsdorf-Neuthard (DE); Krüger, Martin, 68165 Mannheim (DE)
(74) Representative: Zahn, Matthias

(56) References cited:
- EP-A1- 3 026 863
- US-A1- 2014 380 458

## Description

### Technical Field

The disclosure generally relates to transmitting data between computer systems, and more particularly relates to transmitting data through a gateway with data filtering functions.

### Background

Almost every enterprise, manufacturer, organization, government agency and so on (or more generally "entity") relies on information that is processed in the form of computer data. The computers can obtain the data from physical things (such as machines and equipment located at industrial sites, vehicles, etc.), from human users (such as employees or organization members) and so on. For the operation of each entity, the transmission of data between the computers - from source to target - is essential.

In theory, the data transmission could be limited to the computers that communicate within a particular communication system (e.g., an intranet) that is under control of a particular entity. In other words, the data transmission can be limited to the legal or to the physical borders of the entity. For example, in an enterprise, data can be exchanged between the machines or warehouses, between different plants (or factories), or between the plants and the administration. In a university, data is exchanged, for example, between measurement devices in laboratories and data processing computers in office buildings.

In practice, entities avoid limiting the data transmission. Otherwise the entities would go out of operation. For example, communication across the so-called value chain is essential for manufacturing particular products and for providing particular services.

The entities can take advantage of new technologies. As known by terms such as "Internet of Things (IoT)", "Industry 4.0" or the like, communication is possible between physical things, between things and human users, between human users and so on without much technical limitations. For example, the communication systems can be part of a publicly available infrastructure (such as the Internet, in contrast to intranets). Some computers are miniaturized so that they become almost invisible to users. For example, processors are implemented into sensors and convert the sensors into intelligent sensors. By using the IoT, the entities can enlarge their commercial offerings. To name only one example, an equipment manufacturer can provide services to its customers (the equipment operators) remotely. Also, the services can include advanced analytics, predictive maintenance and so on.
US 2014 / 380458 A1 describes an apparatus for preventing illegal access to industrial control systems. The apparatus has first and second interfaces that are connected via filters. Through its interfaces, the apparatus communicates data packets between different groups of components, according to rules, the filter forward or block the data packets.
EP 3 026 863 A1 describes a network device that provides communication between devices in industrial networks. The network device implements a firewall. The number of messages packet to be communicated between the devices is important and is governed by rules.

However, there are challenges from this development, and some of the challenges put the operation of the entity at risk. From a technical perspective, there are points to consider, such as:
(a) Transmitting (and subsequently storing and processing) data requires the use of technical resources, but the amount of data rises, (b) Transmitting data requires so-called meta-data that indicates the destination of the data. The complexity increases with every new destination and can't be managed by human users alone. (c) Transmitting implies the differentiation of access rights to the data at the destination. If the differentiation fails, data can be misused. This can lead to malfunction of technical equipment, including safety and security hazards. (d) Missing data at a particular element of the value chain can eventually stop or interrupt the manufacturing process or the provision of services.

This calls for improving the data transmission for at least some of these points.

### Summary

According to embodiments of the present invention, data transmission is improved by a computer-implemented method that can be implemented by a computer system and by a computer program. The invention is set out in the appended set of claims 1-9.

### Brief Description of the Drawings

FIGS. 1A, 1B and 1C illustrate the transmission of information and of data between interfaces that are part of technical systems;
FIG. 2 illustrates aspects of a data package by way of example;
FIG. 3 illustrates a method for transmitting data packages from a source data system to a data destination system via a gateway;
FIGS. 4A and 4B illustrate systems in further source-gateway-destination arrangements;
FIG. 5 illustrates a gateway with engines;
FIG. 6 illustrates a further scenario to operate the gateway in an arrangement having two data source systems and a single data destination system;
FIG. 7 illustrates details for a routing engine, optionally in combination with the rule engine in a typical scenario; and
FIG. 8 is a diagram that shows an example of a generic computer device and a generic mobile computer device, which may be used with the techniques described herein.

### Detailed Description

### Overview

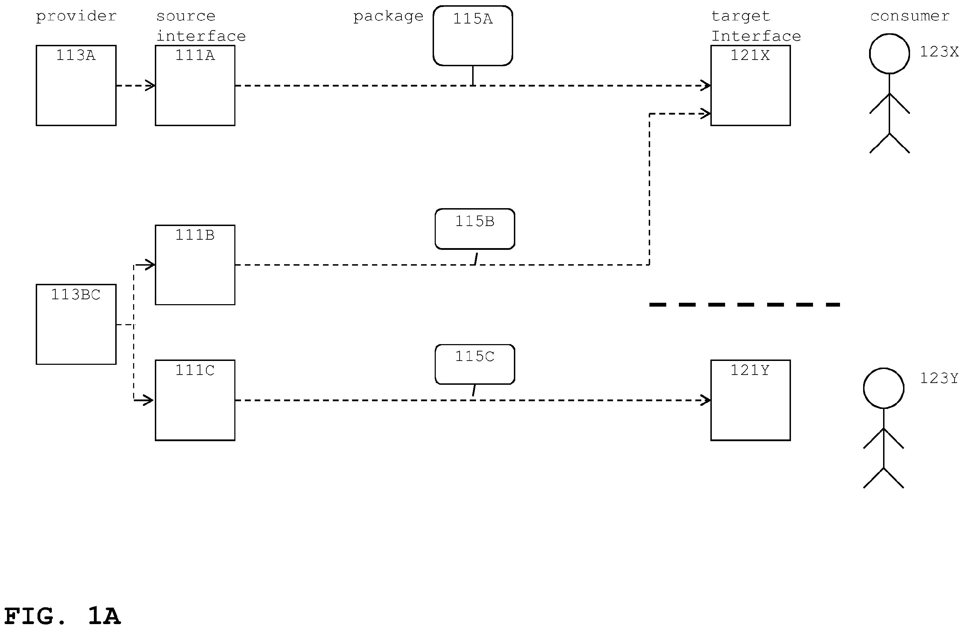

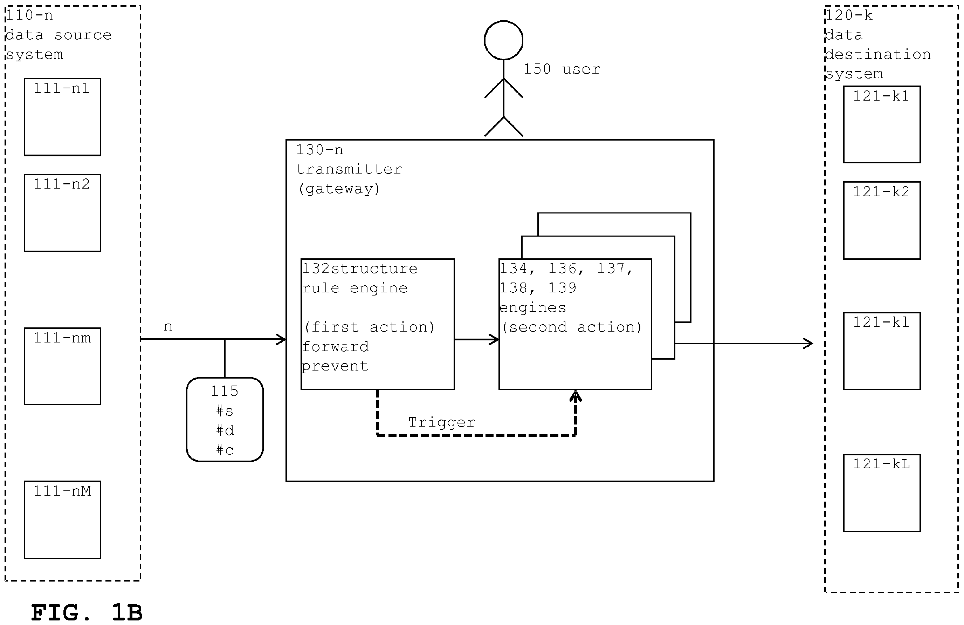

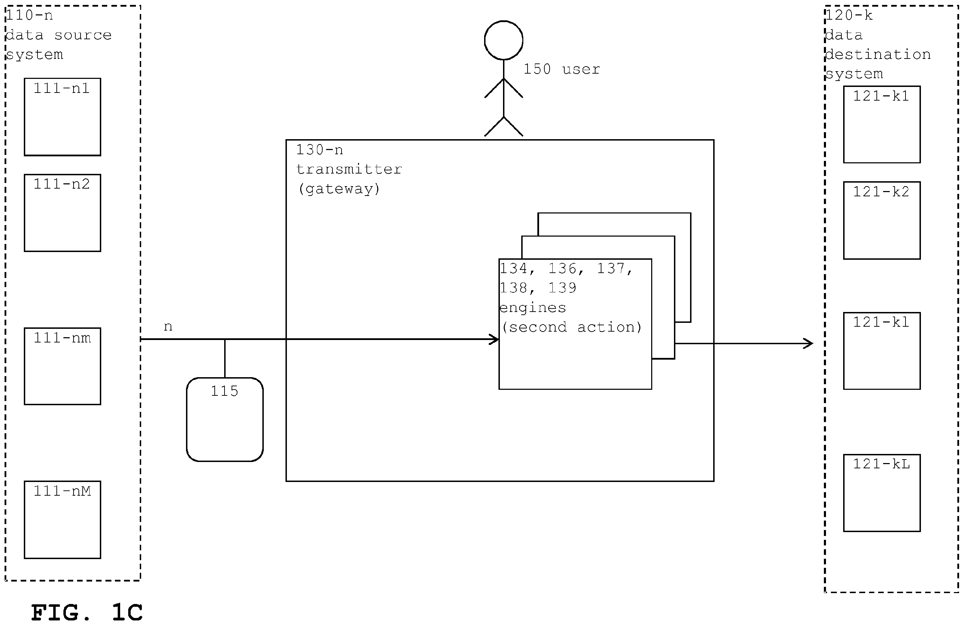

FIGS. 1A, 1B and 1C illustrate the transmission of information between information providers and information consumers. This transmission is implemented by the transmission of data between interfaces. The interfaces are part of technical systems. Inter-system gateway 130 (or "transmitter") acts as a data hub for selectively forwarding data, for configuring the data flow, for providing data visualization and for other functions.

FIGS. 1A, 1B and 1C give an overview to the transmission by illustrating information providers 113, data source interfaces 111, data packages 115 (or "data sets", or "data packets"), data destination interfaces 121 (or "data target interfaces") and information consumers 123. The terms "target" and "destination" are used as synonyms.

From an overall perspective, there is transmission along a main direction that is the provider-to-consumer direction. This main direction corresponds to the source-to-target direction. This main direction is illustrated by left-to-right going arrows.

FIG. 1A illustrates transmission (of information and data) by dashed-arrows. This convention disregards technical implementations (data networks such as wide area networks WAN or local area networks LAN, data busses, communication system in general such as intranets, or the internet etc.).

FIGS. 1B and 1C illustrate data transmission at the technical level under consideration of communication channels (plain arrows) between first technical system 110 (data source system) that comprises a plurality of data source interfaces 111 and second technical system 120 (data destination system) that comprises a plurality of data destination interfaces 121. In the figures, the references have indices that will be explained below.

FIGS. 1B and 1C also illustrate the concept of gateway 130 that transmits data between the systems. Gateway 130 comprises rule engine 132 that receives data packages 115 and that applies pre-defined rules. According to properties of the data packages 115, rule engine 132 identifies a first action (e.g., forwarding packets, intercepting packets or "blocking packets"). The person of skill in the art can implement forwarding (and non-forwarding) by appropriate circuitry or computer arrangements such as switches, routers, logic gates, memory write/read operations and so on, without the need of further explanation herein.

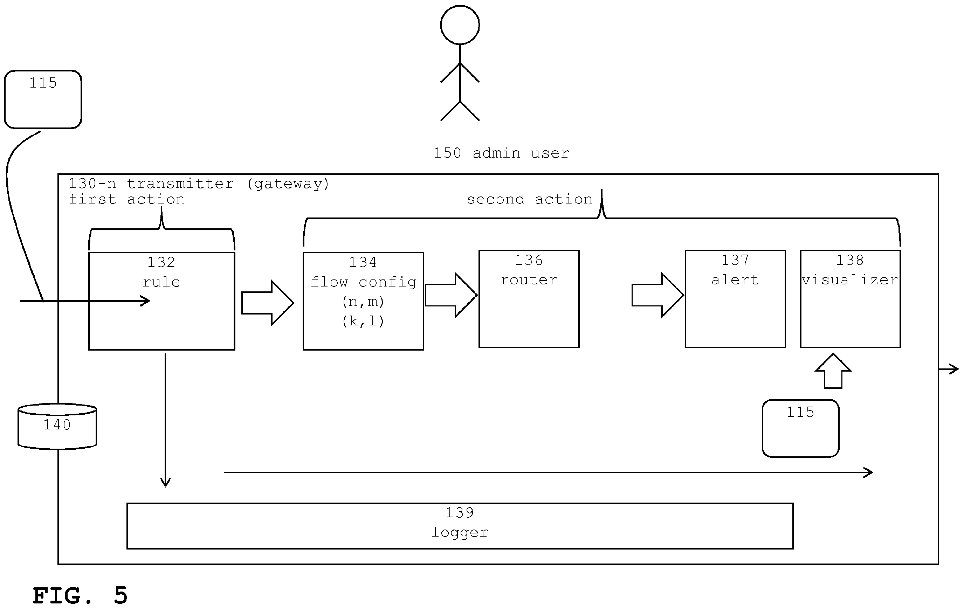

Gateway 130 can comprise further engines 134, 136, 137, 138, 139 that perform further actions (so-called "second actions"). Rule engine 132 triggers the activities of the further engines. Some of the further engines can communicate with human user 150 (e.g., to receive data flow configuration information, to visualize the data flow etc.). This communication can occur at different time points (e.g., prior to receiving the packages, after having received them). Details will be explained in connection with FIGS. 5, 6, and 7.

FIGS. 1B and 1C illustrate alternative embodiments. Depending on the data packages 115, rule engine 132 is able to derive data and consequently to apply a rule, or is unable to derive data and to apply a rule.

Occasionally, data source interfaces 111 deliver data packages 115 in a format ("legacy format") that is not compatible with rule engine 132. As a consequence, gateway 130 can only take some actions (i.e. some of the second actions, but not the first action). As used herein, a data package in legacy format is a data package that contains data not readable by rule engine 132 (no deriving).

The person of skill in the art understands that both alternatives can be combined into a single gateway. For example, such a gateway by-passes data packages in legacy format and potentially applies some of the second actions, but processes the other data packages (i.e. nonlegacy packages) with first and with second actions. The description concentrates on the approach in FIG. 1B, but the teachings are applicable to the approach in FIG. 1C as well. Persons of skill in the art understand that in case of gateway 130 according to FIG. 1C, rule engine 132 can be de-activated so that the second actions are triggered upon receiving a (legacy) data package 115.

Generally, there is at least one gateway per technical system 1 10-n. For convenience of explanation, one gateway is assumed to be provided for one communication channel.

As illustrated on the left side of FIG. 1A, information providers 113 communicate with data source interfaces 111 (in at least the direction to the interfaces). Information providers 113 can be physical things or can be human users (such as employees or organization members) and so on. Data source interfaces 111 communicate data packages 115 to data destinations interfaces 121 (right side).

### Properties of the data packages

Gateway 130 (FIG. 1B) receives the data by data packages 115 that are formatted such that data of at least two of the following types is derivable:
meta-data (#s) that is indicative of a particular interface 111-nm of the data source system 110-n,
destination data (#d) that is indicative of a particular data destination interface 121-kl of data destination system 120-k, and
content-data (#c) to be stored by the data destination (120).

That implies that some of the packages (#d #c) do not indicate where they come from, some of the packages (#s #c) do not have a destination, and even some of the packages (#s #d) may lack content. There is, however, no need to implicitly indicate the types, #s #d #c is derivable. For example, operation data (#c) from a particular industrial machine (#s) can be identified for storage at a particular interface, but details are explained below.

### Examples

In the example for things, information providers 113 can be computers or computer systems, industrial machines, vehicles or other equipment, or even components such as programmable logic controllers (PLC). Information providers 113 can be computers (or computer systems) in various functions such as for enterprise resource planning (ERP), condition monitoring (plants or factories), maintenance (such as computerized maintenance management systems (CMMS)), process control, and so on. Information providers 113 with data source interfaces 111 in combination can be computers providing data that assists to organizing the production (in a factory). Examples for such data are shift plans (e.g., operator schedules), availability lists (for intermediate products, for human operators, etc.), also documents with billing information, financial data etc.

In a different granularity, information providers 113 can be computer components (such as storage units), machine components (such as sensors, measurement devices), vehicle components (such as sensors, measurement devices), and so on.

In the human user example, the information providers 112 are human users that interact with data source interface 111, for example by operating a user interface (UI) component. Machine operators, vehicle drivers and other persons can interact with machine or vehicle components. Data becomes available at source data interface 111, and the data relates to the state of the machine or vehicle being a technical system.

Data source interfaces 111 forward data packages 115 (or "data sets"). In data packages 115, the data may have a format that corresponds to the presentation layer (6) or to the application layer (7) in the Open Systems Interconnection model (OSI model). The meta-data (#d) that indicates the destination of the data can be available at that layer as well. Data destination interface 121 receives the data packages 115.

As mentioned above, transmitting data implies the differentiation of access rights at the destination. This differentiation is usually related to data source interface 111. This will be explained in the following example:
As illustrated, information provider 113A communicates information to data source interface 111A. Data source interface 111A communicates data package 115A to data destination interface 121X. Data destination interface 121X is a data structure (on a data storage device) that is accessible by information consumer 123X. As illustrated, the information consumer 123X can be a human user X. This is much simplified. The person of skill in the art can set up access rights differently, for example, according to user roles.

As it is further illustrated, information provider 113BC communicates information (of different types) to data source interfaces 111B and 111C. The interfaces forward data packages 115B and 115C, respectively, to data destination interfaces 121X and 121Y, for access by information consumers 123X and 123Y, respectively. As illustrated by a dashed line, information consumers 123X and 123Y can be human users that have separate access rights. In other words, data of a first type is transmitted to a destination that is specialized in receiving data of the first type, and data of a second type is transmitted to a destination that is specialized in receiving data of the second type.

For example, information provider 113BC can be a particular industrial robot that provides first type information regarding the production of a particular technical product (e.g., a log of all movements performed for the product), and that provides second type information regarding the accumulated number of rotations (of its robot arms), a current temperature in the motor, and other technical data. Such data is relevant for maintaining the robot, to identify failures, to schedule repairs and the like.

In the example, both data types are separated, data regarding technical products is only transmitted to a product expert (e.g., user X), but data regarding maintenance is only transmitted to a maintenance expert (e.g., user Y). From a different perspective: Y may work on data from different entities, and he or she is not allowed to see what the robots are producing. Applying this rule (by engine 132) supports the separation of access rights.

### Granularity in view of multiple interfaces

FIG. 1B uses a different granularity and illustrates that data source interfaces 111 and data destination interfaces 121 can be combined to source system 110 and to destination system 120, respectively, as illustrated by dashed rectangles. It is noted that the information providers (113 in FIG. 1A) and the information consumers (123 in FIG. 1A) do not necessarily belong to the technical systems 110/120. To simplify the further explanation of the granularity by way of examples, references (in the figures) use the following counting indices: Index n = 1...N identifies a particular data source system 110-n. Index m = 1...M identifies a particular data source interface 111-nm within the particular data source system 110-n. Index k = 1 ... K identifies a particular data destination system 120-k. Index l = 1 ... L identifies a particular data destination interface 121-kl within the particular data destination system 110-k.

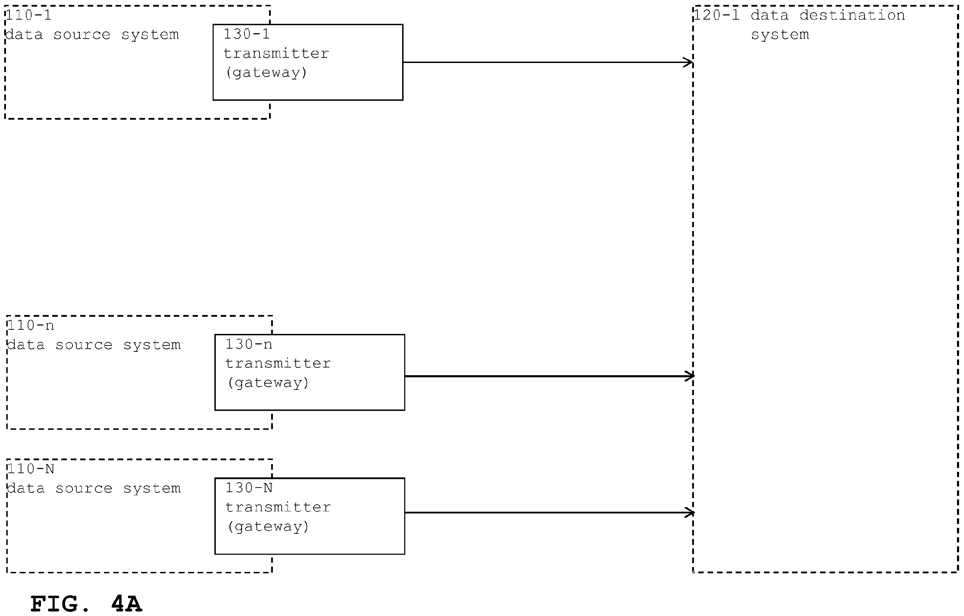

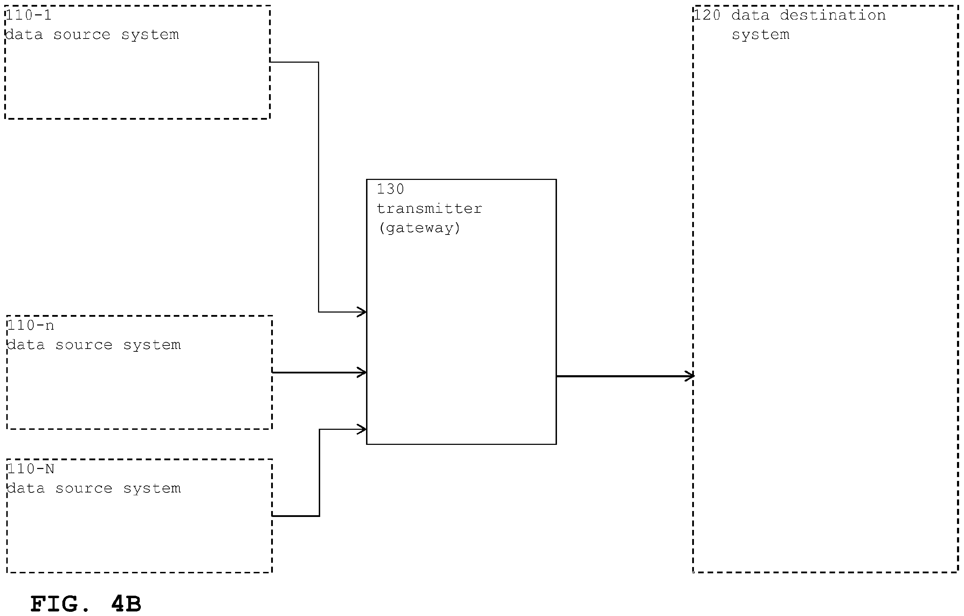

FIG. 1B illustrates a source-gateway-destination arrangement having a single data source system 110-n, a single gateway 130-n, and a single data destination system 120-k. Other arrangements will be explained in connection with FIGS. 4A and 4B.

A association of a particular data source interface 111-nm to a particular data source system 110-n can follow pre-defined principles, among them the following:
(i) Most of the interfaces 111-n1 to 111-nM in system 110-n forward data packages 115 via a single communication channel. Such a channel would have index n as well. Such a channel can be characterized in that the interfaces share a common property, among them the communication from a particular IP-address (of system 110-n) or from a particular range of IP-addresses (that had previously been allocated to system 110-n), communication from particular computer ports, communication via a particular technical medium or protocol (e.g., wireless local area network, local area network etc.)
(ii) Most of the interfaces 111-n1 to 111-nM belong to a single entity. For example, system 110-n (and its interfaces) is operated by a particular manufacturing enterprise for a particular plant (or particular factory).
(iii) The interfaces 111-n1 to 111-nM are physically installed at a particular industrial site. However, the interfaces can be associated with providers belonging to different entities. Such a scenario can be typical for so-called industrial parks.

The principles are applicable for the destination system 120 likewise. For example, according to principle (ii), system 120 can be operated by a particular maker of industrial equipment. That allows collecting data from interfaces that are associated with factories or plants that use the industrial equipment of that maker (cf. 123Y in FIG. 1A).

Destination system 120 can be implemented by computers that are located in a building (server farm, computer cloud, principle (i)) that is remote to the computers and to the gateways.

Data packages 115 are routed with meta-data that is available for each data package (from-to-relation, source-destination-relation). It is not required that each data package includes this meta-data. As used herein, the routing of a data package is indicated by the indices: from source (n,m) to destination (k,l).

This is simplified, by the person of skill in the art can implement the routing otherwise. Instead of the indices, other identifiers can be used, for example by:
- A system ID name (e.g., "ROBOTCLOUD" for a system 120 collecting data regarding industrial robots)
- the Internet Protocol (IP) address of particular system
- the identification of databases and data structures within a database (e.g., identification of tables, rows, columns, keys etc.)
- identifiers that are available for the information provider (e.g. an ID number of a machine) or of the information consumer (e.g., a particular human user, or role)

The person of skill in the art can use different identifiers in combination.

### Details for the data by way of example

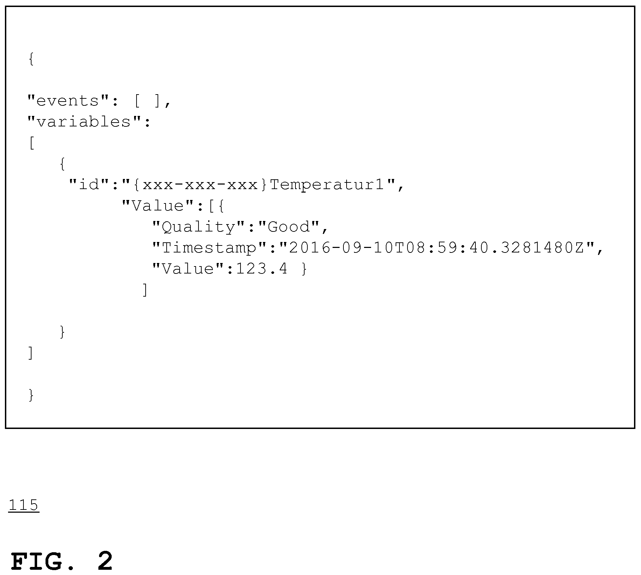

FIG. 2 illustrates aspects of the data package 115 by way of example. While the figure illustrates the data package, the description explains its structure definition (i.e., data-model). The definition can be stored at data source interface 111 (that sends the package) and that is connected to information provider 113, or the definition is stored at gateway 130. The example is given in the computer language JSON (JavaScript Object Notation), but a person of skill in the art can use other conventions (e.g., languages such as XML).

The definition and the package can be organized in hierarchies. The hierarchies can be represented by characters such as { }, but for simplicity of explanation, most of these characters are omitted. Some of the data is used by the rule engine 132 in gateway 130. In this example, rule engine 132 can parse data package 115. (It is noted that data packages that can't be parsed are in the legacy format, cf. FIG. 1C).

The information provider (in the example, the particular robot) has identification numbers (e.g., "id" ="xxx-xxx-xxx", "name": Robot 1234"). The information provider can be of a particular provider type, so that the interface has a particular interface type. The types can correspond to the above-mentioned data types, and the data types can be input to the rule engine. For example, the types are "IRB 6600" (a trade name for a robot), "Robot" (a general indication that the provider is an industrial machine in the categories "robot" and "asset")

A variable is defined for "Temperatur1" (i.e., a temperature value measured by a particular sensor), with the variable having properties. The properties comprise definitions or coding conventions: that the temperature is coded as a number in the "double" format, that the measurement unit is degree Celsius (°C), that the range is from minus 20 °C and plus 500 °C and others.

Looking at the rules in rule engine 132, there is a first rule indicating that robots ("Robot" given in the data package) are not allowed to send data to specific data destinations (e.g., not to destinations with l = 1, 2, and k = any). There could also be rules in a positive way: robots are only allowed to send data to a particular destination (e.g., l=3, k=3).

The information provider (i.e. the particular robot) could have further properties, such as a serial number (in the data format 32-bit-integer), a particular value for that serial number (e.g., 2134324), a frequency indication for the electrical supply (e.g., coded by 32-bit-integer to be connected to 50 Hz power supply.

Again looking at the rules, there can be a rule to channel data transmission according to the serial numbers (e.g., from 2134324 to destination 120-55, from 2134325 to destination 120-99 and so on). An further rule could check the frequency, in combination with other data: a robot from a source system in western Japan with a frequency indication of 50 Hz would raise an alert (i.e. a second action), because the power in supply in that geographic region operates at 60 Hz.

It is possible that such data is part of the data package. FIG. 2 illustrates a particular example of a data package 130 from the robot, the so-called payload (#c, that is being transmitted, in case of forwarding as the first action).

### Method

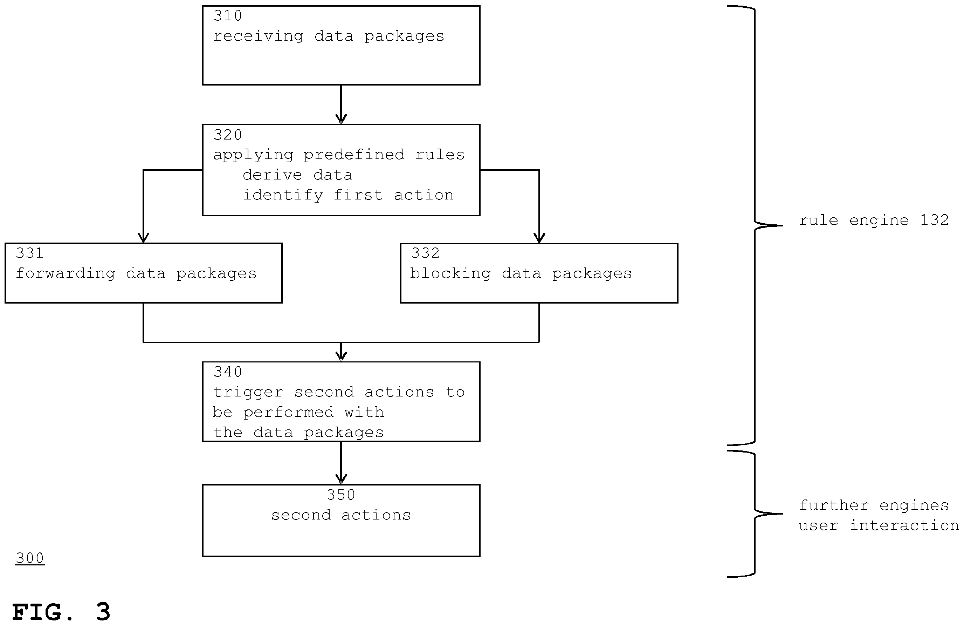

FIG. 3 (in combination with FIG. 1B) illustrates computer-implemented method 300 for transmitting data packages 115 from source data system 110-n to a data destination system 120-k. Both systems are technical systems. As explained above, data source system 110-n comprises a plurality of data source interfaces 111-nm, and data destination system 120-k comprises a plurality of data destination interfaces 121-kl (with different data access rights for different data consumers). The method is performed by a computer in gateway 130.

In step receiving 310, gateway 130 receives (from system 110-n, cf. FIG. 1B), one or more data packages 115-n. The packages are formatted such that data of at least two of the following data types is derivable: meta-data (#s, indicative of particular data source interface 111-nm of system 110-n), destination data (#d, indicative of particular data destination interface 121-kl of system 120-k), and content-data (#c) to be stored by system 120-k (at particular data destination interface 121-kl).

In step applying 320 predefined rules, gateway 130 derives data of the at least two data types (#s, #d, #c) and identifies a first action. The first action is either forwarding 331 the one or more data package 115 to the particular data destination interface 121-kl (of system 120-k), or preventing 332 forwarding ("blocking").

In step triggering 340, gateway 130 operates depending on the first action and on the data that was derived. The gateway internally triggers second actions 350 to be subsequently performed with data packages 115.

As explained, gateway 130 uses rule engine 132. Rule engine 132 implements the predefined rules such that the first action is identified as preventing 332, upon compliance with conditions. Many conditions have already been explained, so that the following is a summary: In one embodiment, the gateway receives particular data packages with meta-data (#s) that is indicative of a particular data source interface of the data source system being a system handling sensitive data (e.g., a financial system or a human resource system).

Within a predefined time interval, the gateway receives a numerical quantity of particular data packages, with the numerical quantity exceeding a predetermined threshold. The condition is applied to data packages with meta-data that indicate a particular data source interface, or applied to data packages with meta-data that indicate a particular data destination interface, or the condition is applied to a combination thereof.

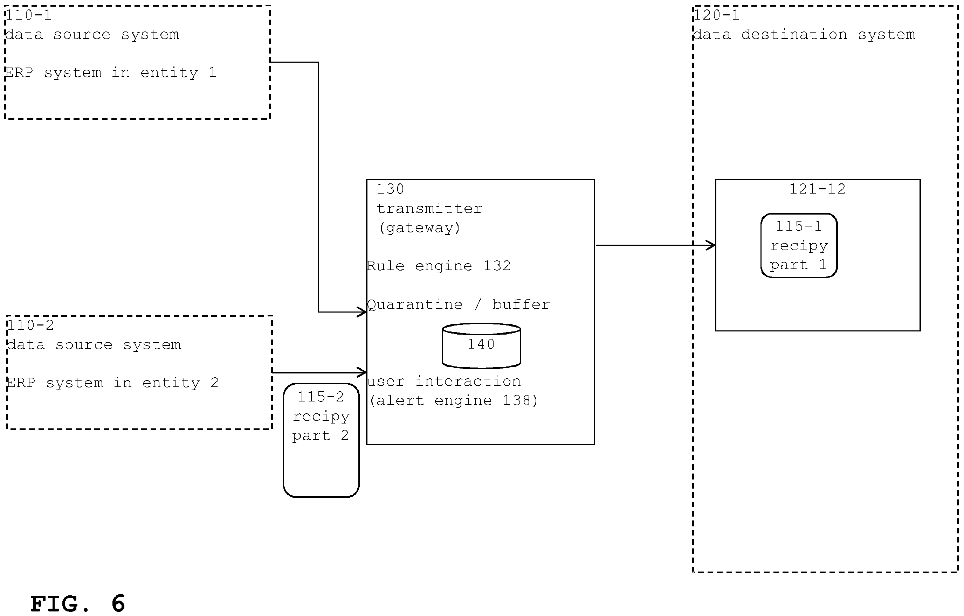

The gateway receives a first data package and a second data package having the identical destination data (#d) and having content-data (#c) in a first portion and in a second portion that are complementary. An example will be explained in connection with FIG. 6.

The gateway receives one or more particular data packages with meta-data (#s) that is being indicative of a particular data source interface of the data source system. The particular data source interface belongs to a predefined hierarchy within the data source system.

The gateway receives one or more particular data package with meta-data (#s) that is indicative of a particular data source interface of the data source system. The particular data source interface belongs to a predefined hierarchy within the data source system, or belongs to a predefined type of data source interfaces.

The rule engine can implement the numerical quantity as a predefined number of particular data packages (that are received during the time interval), or implement the numerical quantity as a predefined increase of the number of particular data packages (i.e., the mathematical derivation of a number function over time).

When the first action is preventing 332, the one or more second actions 350 are buffering the data package 115 in buffer storage 140.

The engine forwards the data package to the particular data destination interface if a predetermined number of data packages with equal attributes and attribute values have been received during a predetermined time interval. This approach avoids the transmission of relatively tiny package, by switching to batch processing. The buffer is used to collect packages until being transmitted.

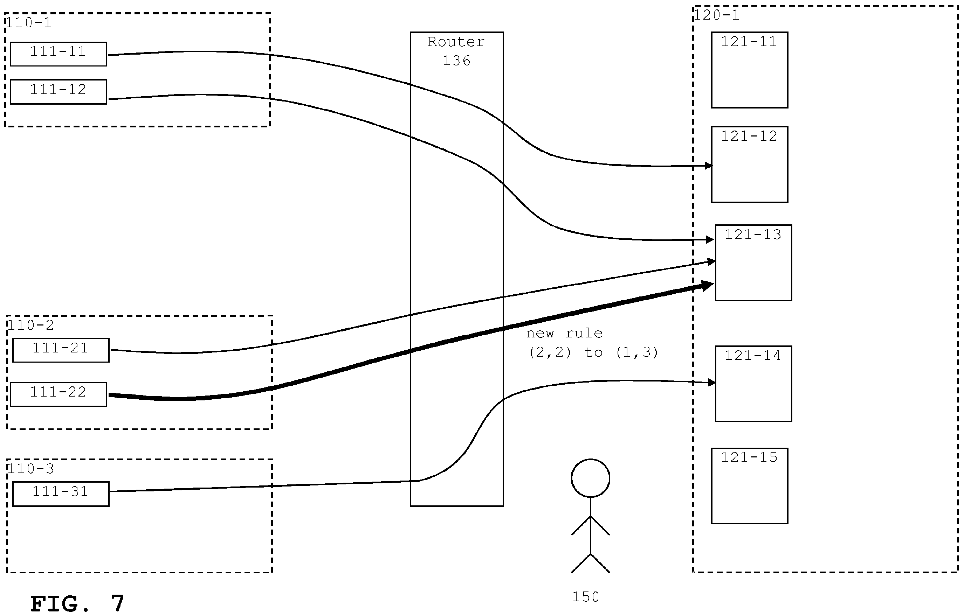

(Outside the scope: The engines (that perform the second actions) interact with an administrator user to receive an indication to forward the particular data package to a particular data destination interface. The engines interact with an administrator user to receive a source-destination relation ((n,m)/(k,l)) that indicates to forward data packages that have common meta-data, destination data, or content-data (common with the particular package that was received and buffered), to a particular data destination interface, wherein the source-destination relation is added as a rule to a data-flow engine. It may be advantageous that further arriving packages are not being buffered. An example is explain in connection with FIG. 7.)

The engine can interact with a user to raise an alert. The person of skill in the art can define such conditions. For example, a potential violation of access rights can lead to the alert.

The engine can interact with a user to remove the data package from the buffer storage.

The engine can interact with a user to visualize the number of data packages between particular data source interfaces and particular data destination interfaces. The user is given a picture how both technical systems operate with each other, and the user can interfere with the operations of these systems.

Looking at the second actions 350, there are many further options such as logging the number of data packages (logging engine) and deriving statistics regarding the transmission of the data packages.

In implementations with gateways that potentially receive data in legacy formats (cf. FIG. 1C), the execution of the step applying 320 predefined rules can fail because deriving data of the at least two data types is not possible (legacy format). In this case, the first action is forwarding 331 the data package, and the one or more second actions 350 are, for example: logging the number of data packages, or deriving statistics regarding the transmission of the data packages. Although the transmission of certain data (in legacy format) can not be avoided, monitoring is possible. A user (e.g. admin user 150) can conclude actions to be taken.

Optionally, the rule engine can identifies the first action as forwarding (331), upon compliance with any of the following conditions:
The gateway receives one or more particular data packages with meta-data (#s) that is recorded on a white-list. The list is accessible to the rule engine.
The gateway receives one or more particular data packages but fails to derive data of the at least two data types. This is the case described in connection with FIG. 1C for legacy-data.

Optionally, there can be further step of interacting with a data flow administrator user 150 to provide a particular rule being a rule for the steps applying 320 to identify the first action 351, 352 or being a rule that controls the one or more second actions.

Looking at the granularity, FIGS. 4A/4B will explain several source-gateway-destination arrangements. From a method step perspective, this relates to the deployment of the software to the gateway. Gateway 130-n can be deployed to the first technical system 110-n. In an alternative arrangement, the method is performed by a gateway 130 that is communicatively coupled to multiple first technical systems 110-1, 110-N, and that is communicatively coupled to a single second technical system 120-k.

### Computer program

FIG. 3 also illustrates a computer program or a computer program product. The computer program product - when loaded into a memory of a computer and being executed by at least one processor of the computer - performs the steps of the computer-implemented method. So in other words, the blocks in FIG. 3 illustrate that the method can be implemented by a computer in gateway 130 under the control of the program. The same principle applies to the actions that are explained but not further illustrated in FIG. 3.

It is noted that existing gateways could be updated via software to perform the method.

### Further arrangements

FIGS. 4A and 4B illustrate systems in further source-gateway-destination arrangements.

FIG. 4A illustrates a plurality of source data systems 110-n each having its own gateway 130-n (n=1 to N). There is a single destination system 120-k (k=1). Such an arrangement is advantageous for entities that operate independently, but that operate industrial equipment from the same manufacturer. For example, source systems 110-1, 110-2 and 110-3 belong to enterprises 1, 2 and 3, respectively that all employ robots made by a particular robot manufacturer (running 120-k).

FIG. 4B illustrates a plurality of source data systems 110-n that share a gateway 130 (no index n in this case). Data is forwarded to destination system 120. Such an arrangement is advantageous for an entity that runs several plants, each having its own source data system. Data is aggregated and forwarded to a single destination system. In this arrangement, gateway 130 can be considered as a central data hub that is central in view of the different source systems.

It is possible to implement hybrid arrangements, or to implement arrangements that are organized in hierarchies. The principle of operating the gateway(s) remains the same, but rules in the different arrangements can be different. Based on the description here, the person of skill in the art can select the appropriate rules.

### Functions of the engines inside the gateway

FIG. 5 illustrates gateway 130 with further engines 134, 136, 137, 138, 139. Preliminary storage component 140 (a "buffer") is illustrated at the edge of gateway 130. This indicates that storage component 140 can be part of gateway 130 or that storage component 140 can be located elsewhere (e.g., remote to gateway 130).

These are flow configurator engine 134 (interacting with a human user 150), router engine 136, alert engine 137, visualizer engine 138, and logger 139. For simplicity, index n is left out. There is no need to run all engines all the time.

There is a distinction into a first action (of the rule engine) and a second action (or, second actions, by the other engines). The second action is triggered by rule engine 132 (cf. the large arrows).

Flow configurator engine 134 can interact with user 150 to configure the data transmission (i.e. from-to, source-destination relations). This can include adding or removing) data structures (to the packages) which are indicative of access rights at the destination (cf. consumer 123X, 123Y in FIG. 1A). Such data structures can include certificates (e.g., certificates for authenticating the data interface at the source, for controlling access rights at the destinations etc.).

Flow configurator engine 134 can identify the destination based on the content of the data (cf. the example of FIG. 2).

Flow configurator engine 134 can interact with user 150 to receive a configuration that distinguishes continuous data transmission (i.e. incoming data packages are forwarded without storing) and bulk data transmission (i.e., incoming data packages are stored (i.e. buffered) in preliminary storage 140 or elsewhere and forwarded in bunches or larger packages.

Logger 139 performs logging for a variety of data. Logging criteria can be configured like rules. For example, logger 139 logs actual data transmissions (in case of first action = forward) and logs cases in that data transmissions had been prevented (first action = prevent). Activities of user 150 can be logged as well (e.g., setting up new from-to relations).

Looking at the time, a run-time is the time during that data packages are actually transmitted. The first action (rule engine) is performed during run-time. An interaction-time is the time during that user 150 interacts with gateway 130. The interaction can coincide with the run-time, but there is less time required. User 150 does not have to be present at run-time. Logger 139 and alert engine 137 operate in the background, during run-time (limited interaction in case of alerts). Router 136 operates at run-time (being initially configured via data flow configurator 134, or re-configured during user interaction).

Most of the second actions are triggered from rule engine 132 (no operation all of the time.). It is noted that some further engines can operate with the trigger (e.g., log engine 139 be in operation all the time).

### Scenarios

The operation of the engines and especially the interaction between the engines is now further illustrated by scenarios:
(scenario 1) Upon receiving data package 115 that does not have destination data (#d), rule engine 132 prevents forwarding and buffers packages 115 in preliminary storage component 140 (first action, plus buffering) and triggers configurator engine 134 to interact with user 150. The user is an administration user who enters destination data (e.g., identification of a particular data destination (4,5)) and who enters a rule (e.g., packages from source (2,3) to destination (4,5) without preliminary storing). This new rule updates the rules in rule engine 132 (no further preliminary storing) and updates information in router 136 ((2,3) to (4,5)). This scenario can include an interaction with user 150 to obtain approval or denial.
(scenario 2) Upon transmitting data package 115 (first action, by engine 132: forwarding), data logger 139 and alert engine 138 apply a quantity rule (second action) to raise an alert. An alert condition could be, for example, that the number of data packages 115 transmitted to a particular data destination with a particular time interval (e.g., within a minute) reaches a number above a pre-defined threshold. In other words, this scenario describes the detection of an anomaly, here a spike in data transfer. The rules can be further enhanced, for example, by switching from forward to block (first action) upon reaching the threshold, by forwarding blocked data packages to intermediate storage 140, by an interaction with user 150 (in a function of admin user and or data analyst user). For example the user could release the data for transmitting them to the destination.
(scenario 3) In case of data packages in legacy format, the rule engine forwards the package to the other engines, but does not block the transmission of data. The engines can interact with the user to provide alerts and/or statistics.
(scenario 4) The data packages can have properties ("type", "category", "attribute"), among them the following:
   data.origin: This corresponds to the source and indicates a particular information provider, such as a particular robot, or indicates a particular interface etc.
   data. component: This relates to the data source interface and indicates that data is from a component being a motor or being a pump, and indicates that data is from a component that is a robot etc.
   data.operation: This relates to content data that becomes available when the component is being operated, when an industrial machine is producing things, when a particular robot is moving (such as the number gripping operations performed during a particular day).
   data.risk: This is content data that indicates (or flags) access rights, data destination restrictions or the like. For example, data packages with such an indication come from financial systems or from human resource systems. Such data packages must not be transmitted. The first action by the rule engine is to prevent the transmission.
   data.hierarchy: This relates to content that indicates the origin within a hierarchy of components, of interface, of information providers etc. Depending on the hierarchy, data transmission is allowed or denied (first action by the rule engine).
   data. certificate: This can be a binary indication that data is related to a certificate (or not).
   Optionally, a certificate is identified.

Further engines can be implemented for further functions. For example, a counter engine interacts with logger 139 and aggregates quantity information relating to data transmission (number of transmitted packages, amount of data, etc.). This quantity information can be used for billing purposes.

FIG. 6 illustrates a further scenario to operate gateway 130 in an arrangement having two data source systems 110-1 and 110-2 and a single data destination system 120-1. FIG. 6 illustrates the engines that are discussed here.

Gateway 130 receives first and second data packages 115-1/115-2 that have an identical destination (#d). The content-data (#c) of both packages are complementary to each other to an overall content. The description uses the following example:
Assuming that a single entity manufactures a particular technical product (e.g., a chemical substance) under a know-how license from a third party (also being an entity). The product is manufactured according to certain manufacturing steps to be performed in a certain order, and with certain technical parameters, and with certain ingredients. Steps, parameters and ingredients are collectively referred to as "recipe".

To mitigate the risk of breaching know-how, the production of the product is separated into a first step sequence (in a first plant, recipe part one) and a second step sequence (in a second plant, recipe part two). However, knowledge of both parts would allow the reconstruction of the complete recipe. In case that the ERP system in the first plant (i.e. a first interface, with a first data package) sends part one of the recipe to the destination system (e.g., to data destination 120-12), and the EPR system in the second plant sends part two of the same recipe (i.e., a second interface, with a second data package) to the same destination, rule engine 132 would put part two into preliminary storage 140 (for quarantine).

In this scenario, alert engine 138 would alert a user to take action (e.g., to delete the second package from the buffer, to allow forwarding, to re-arrange the access right to prevent further alerts, etc.). The first part of the recipe (i.e. package 115-1) arrives at the destination, but does not disclosure the recipe as a whole. The scenario is substantially the same if the second part arrives at the gateway prior to the first part.

FIG. 7 illustrates details for routing engine 136, optionally in combination with rule engine 132 in a typical scenario by example. In this arrangement, data source systems 110-1, 110-2 and 110-3 have interfaces 111-12/ 111-12, 111-21, and 111-31. Data destination system 120-1 has interfaces 121-11 to 121-15. Router 136 stores the following source-destination relations: (1, 1) to (1, 2); (1, 2) to (1, 3); (2, 1) to (1, 3); (3, 1) to (1, 4)
The notation follows the (n,m) (k,l) indices, but the router can store the relations otherwise.

Source data interface 110-22 sends a data package. Router 136 does not yet have source-destination relation for packages from that particular origin. As a consequence, the rule engine prevents the forwarding and buffers the package. Through user interface (e.g., with admin user 150), the relation is established as (2, 2) to (1, 3) for the particular data package (take from the buffer) and for the data packages that the gateway receives subsequently, as illustrated by the bold line.

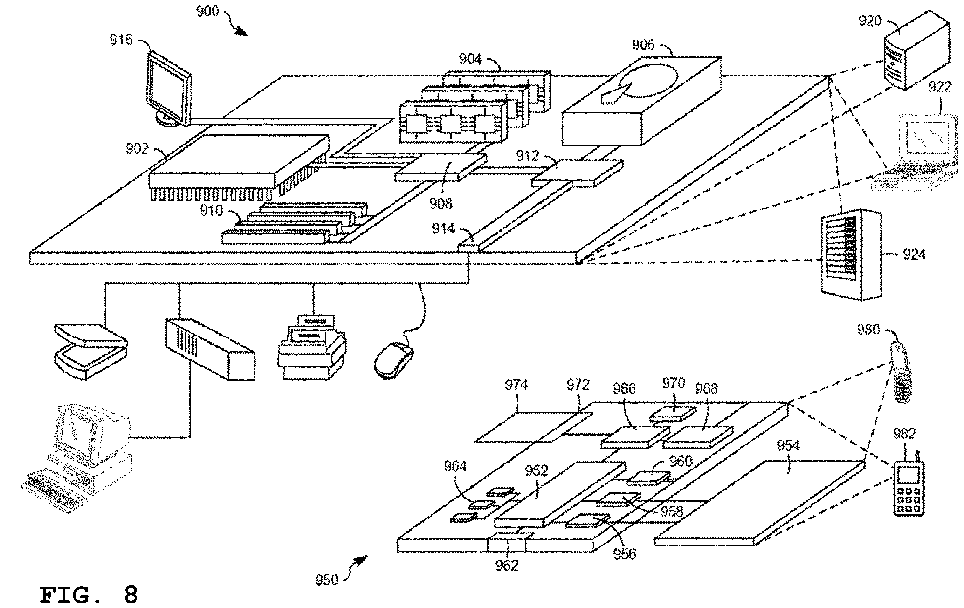

FIG. 8 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a micro drive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other. The aforementioned embodiments are meant to be examples useful for understanding the invention. The present invention is only defined by the appended claims.

## Claims

1. Computer-implemented method (300) for transmitting data between a first technical system (110-n) and a second technical system (120-k), with the first system (110-n) being a data source system that comprises a plurality of data source interfaces (111-nm), and with the second technical system (120-k) being a data destination system that comprises a plurality of data destination interfaces (121-kl), wherein the data destination interfaces (121-kl) have different data access rights for different data consumers (123), the method (300) comprising:
receiving (310), by a gateway (130), from the first technical system (110-n), one or more data packages (115-n) being formatted such that data of at least two of the following data types is derivable:
• meta-data (#s) that is indicative of a particular data source interface (111-nm) of the data source system (110-n),
• destination data (#d) that is indicative of a particular data destination interface (121-kl) of the second technical system (120-k), and
• content-data (#c) to be stored by the second technical system (120-k) at the particular data destination interface (121-kl);
applying (320), by the gateway (130), predefined rules, the rules deriving data of the at least two data types (#s, #d, #c), and identifying a first action: being either forwarding (331) the one or more data package (115) to the particular data destination interface (121-kl) of the second technical system (120-k), or preventing (332) forwarding, and
depending on the first action and on the data that was derived, triggering (340), by the gateway (130), one or more second actions (350) to be subsequently performed with the one or more data packages (115),
the method (300) being implemented by the gateway (130) that uses a rule engine (132),
wherein the rule engine (132) implements the predefined rules such that the first action is identified as preventing (332), upon compliance with any of the following conditions:
within a predefined time interval, the gateway (130) receives a numerical quantity of particular data packages (115), with the numerical quantity exceeding a predetermined threshold, with the condition being applied to data packages (115) with meta-data that indicates a particular data source interface (111-nm), applied to data packages (115) with meta-data that indicate a particular data destination interface (121-kl), or applied to a combination thereof;
the gateway (130) receives a first data package (115-1) and a second data package (115-2) having the identical destination data (#d) and having content-data (#c) in a first portion and in a second portion that are complementary to each other with respect to an overall content, wherein when the first action is preventing (332), the one or more second actions (350) comprise buffering the data package (115) in a buffer storage (140), wherein the further second action (350) is forwarding the data package (115) to the particular data destination interface (121-kl) if a predetermined number of data packages (115) with equal attributes and attribute values have been received during a predetermined time interval, selected from the following:
the data packages (115) arriving from a particular source or information provider,
the data packages (115) indicating the source being a component being a motor or a pump,
the data packages (115) indicating that a component of an industrial machine is being operated,
the data packages (115) indicating the source within a hierarchy of machine components, or
the data packages (115) indicating a relation to a certificate.

2. The method (300) according to claim 1, wherein the rule engine (132) implements the numerical quantity as a predefined number of particular data packages (115), or implements the numerical quantity as a predefined increase of the number of particular data packages (115).

3. The method (300) according to claim 1, wherein the one or more second actions (350) are selected from the following:
logging the number of data packages (115); and
deriving statistics regarding the transmission of the data packages (115).

4. The method (300) according to any of the preceding claims, wherein during the execution of the step applying (320) predefined rules, deriving data of the at least two data types fails, the first action is forwarding (331) the data package (115) and the one or more second actions (350) are selected from the following:
logging the number of data packages (115), and
deriving statistics regarding the transmission of the data packages (115).

5. The method (300) according to claim 1, being implemented by a gateway (130) that uses a rule engine (132), wherein the rule engine (132) implements the predefined rules such that the first action is identified as forwarding (331), upon compliance with any of the following conditions:
the gateway (130) receives one or more particular data packages (115) with meta-data (#s) that is recorded on a white-list that is accessible to the rule engine (132); and
the gateway (130) receives one or more particular data packages (115) but fails to derive data of the at least two data types.

6. The method (300) according to any of the preceding claims, being performed by a gateway (130-n) that is deployed to the first technical system (110-n).

7. The method according to any of the preceding claims, with the further step of interacting with a data flow administrator user (150) to provide a particular rule being a rule for the steps applying (320) to identify the first action (351, 352) or being a rule that controls the one or more second actions (350).

8. A computer program product - when loaded into a memory of a computer and being executed by at least one processor of the computer - causes the computer to perform the steps of the computer-implemented method according to any of claims 1-7.

9. A gateway (130) adapted to be communicatively coupled between a first technical system (110-n) and a second technical system (120-k) for transmitting data between these technical systems, with the first system (110-n) being a data source system that comprises a plurality of data source interfaces (111-nm), and with the second technical system (120-k) being a data destination system that comprises a plurality of data destination interfaces (121-kl), wherein the data destination interfaces (121-kl) have different data access rights for different data consumers (123),
the gateway (130) adapted to perform a computer-implemented method (300) according to any of claims 1-7.

## Patentansprüche

1. Computerimplementiertes Verfahren (300) zum Übertragen von Daten zwischen einem ersten technischen System (110-n) und einem zweiten technischen System (120-k), wobei das erste System (110-n) ein Datenquellensystem ist, das eine Mehrzahl von Datenquellenschnittstellen (111-nm) umfasst, und wobei das zweite technische System (120-k) ein Datenzielsystem ist, das eine Mehrzahl von Datenzielschnittstellen (121-kl) umfasst, wobei die Datenzielschnittstellen (121-kl) unterschiedliche Datenzugriffsrechte für unterschiedliche Datenverbraucher (123) aufweisen, das Verfahren (300) umfassend:
Empfangen (310), durch ein Gateway (130), von dem ersten technischen System (110-n), eines oder mehrerer Datenpakete
(115-n), die derart formatiert sind, dass Daten von mindestens zwei der folgenden Datentypen ableitbar sind:
• Metadaten (#s), die eine spezielle Datenquellenschnittstelle (111-nm) des Datenquellensystems (110-n) angeben,
• Zieldaten (#d), die eine spezielle Datenzielschnittstelle (121-kl) des zweiten technischen Systems (120-k) angeben, und
• Inhaltsdaten (#c), die durch das zweite technische System (120-k) an der speziellen Datenzielschnittstelle (121-kl) gespeichert werden sollen;
Anwenden (320), durch das Gateway (130), von vordefinierten Regeln, wobei die Regeln Daten der mindestens zwei Datentypen (#s, #d, #c) ableiten, und Identifizieren einer ersten Aktion: die entweder ein Weiterleiten (331) des einen oder der mehreren Datenpakete (115) an die spezielle Datenzielschnittstelle (121-kl) des zweiten technischen Systems (120-k) oder ein Verhindern (332) des Weiterleitens ist, und
abhängig von der ersten Aktion und auf den Daten, die abgeleitet wurden, Auslösen (340), durch das Gateway (130), einer oder mehrerer zweiter Aktionen (350), die anschließend mit dem einen oder den mehreren Datenpaketen (115) durchgeführt werden sollen,
wobei das Verfahren (300) durch das Gateway (130) implementiert wird, das eine Regelmaschine (132) verwendet, wobei die Regelmaschine (132) die vordefinierten Regeln derart implementiert, dass die erste Aktion als das Verhindern (332) identifiziert wird, bei einer Übereinstimmung mit einer der folgenden Bedingungen:
innerhalb eines vordefinierten Zeitintervalls, das Gateway (130) eine numerische Menge spezieller Datenpakete (115) empfängt, wobei die numerische Menge eine vorbestimmte Schwelle überschreitet, wobei die Bedingung auf Datenpakete (115) mit Metadaten angewendet wird, die eine spezielle Datenquellenschnittstelle (111-nm) angeben, die auf Datenpakete (115) mit Metadaten angewendet wird, die eine spezielle Datenzielschnittstelle (121-kl) angeben oder auf eine Kombination davon angewendet wird:
das Gateway (130) ein erstes Datenpaket (115-1) und ein zweites Datenpaket (115-2) empfängt, das die identischen Zieldaten (#d) aufweist und Inhaltsdaten (#c) in einem ersten Abschnitt und in einem zweiten Abschnitt aufweist, die in Bezug auf einen Gesamtinhalt zueinander komplementär sind, wobei, wenn die erste Aktion das Verhindern (332) ist, die eine oder die mehreren zweiten Aktionen (350) ein Puffern des Datenpakets (115) in einem Zwischenspeicher (140) umfassen, wobei die weitere zweite Aktion (350) das Weiterleiten des Datenpakets (115) an die spezielle Datenzielschnittstelle (121-kl) ist, wenn während eines vorbestimmten Zeitintervalls eine vorbestimmte Anzahl von Datenpaketen (115) mit gleichen Attributen und Attributwerten empfangen worden sind, die aus dem Folgenden ausgewählt sind:
die Datenpakete (115), die von einem speziellen Quell- oder Informationsanbieter ankommen,
die Datenpakete (115), die angeben, dass die Quelle eine Komponente ist, die ein Motor oder eine Pumpe ist,
die Datenpakete (115), die angeben, dass eine Komponente einer Industriemaschine betrieben wird,
die Datenpakete (115), die die Quelle innerhalb einer Hierarchie von Maschinenkomponenten angeben, oder
die Datenpakete (115), die eine Beziehung zu einem Zertifikat angeben.

2. Verfahren (300) nach Anspruch 1, wobei die Regelmaschine (132) die numerische Menge als eine vordefinierte Anzahl von speziellen Datenpaketen (115) implementiert oder die numerische Menge als eine vordefinierte Erhöhung der Anzahl spezieller Datenpakete (115) implementiert.

3. Verfahren (300) nach Anspruch 1, wobei die eine oder die mehreren zweiten Aktionen (350) aus dem Folgenden ausgewählt sind:
Protokollieren der Anzahl von Datenpaketen (115); und
Ableiten von Statistiken bezüglich der Übertragung der Datenpakete (115).

4. Verfahren (300) nach einem der vorstehenden Ansprüche, wobei während der Ausführung des Schritts des Anwendens (320) vordefinierter Regeln, des Ableitens von Daten der mindestens zwei Datentypen fehlschlägt, die erste Aktion das Weiterleiten (331) des Datenpakets (115) ist und die eine oder die mehreren zweiten Aktionen (350) aus den Folgenden ausgewählt sind:
Protokollieren der Anzahl von Datenpaketen (115), und
Ableiten von Statistiken bezüglich der Übertragung der Datenpakete (115).

5. Verfahren (300) nach Anspruch 1, das durch ein Gateway (130) implementiert wird, das eine Regelmaschine (132) verwendet, wobei die Regelmaschine (132) die vordefinierten Regeln derart implementiert, dass die erste Aktion als das Weiterleiten (331) identifiziert wird, bei der Übereinstimmung mit einer der folgenden Bedingungen:
das Gateway (130) ein oder mehrere spezielle Datenpakete (115) mit Metadaten (#s) empfängt, die auf einer Zulassungsliste aufgezeichnet werden, die für die Regelmaschine (132) zugänglich ist; und
das Gateway (130) ein oder mehrere spezielle Datenpakete (115) empfängt, aber keine Daten der mindestens zwei Datentypen ableiten kann.

6. Verfahren (300) nach einem der vorstehenden Ansprüche, das durch ein Gateway (130-n) durchgeführt wird, das an das erste technische System (110-n) eingesetzt wird.

7. Verfahren nach einem der vorstehenden Ansprüche, wobei der weitere Schritt des Interagierens mit einem Datenflussadministratorbenutzer (150), um eine spezielle Regel bereitzustellen, die eine Regel für die Schritte des Anwendens (320) ist, um die erste Aktion (351, 352) zu identifizieren, oder eine Regel ist, die die eine oder die mehreren zweiten Aktionen (350) steuert.

8. Computerprogrammprodukt - wenn es in einen Speicher eines Computers geladen und durch mindestens einen Prozessor des Computers ausgeführt wird - bewirkt, dass der Computer die Schritte des computerimplementierten Verfahrens nach einem der Ansprüche 1 bis 7 durchführt.

9. Gateway (130), das angepasst ist, um zwischen einem ersten technischen System (110-n) und einem zweiten technischen System (120-k) zum Übertragen von Daten zwischen diesen technischen Systemen kommunikativ gekoppelt zu werden, wobei das erste System (110-n) ein Datenquellensystem ist, das eine Mehrzahl von Datenquellenschnittstellen (111-nm) umfasst, und wobei das zweite technische System (120-k) ein Datenzielsystem ist, das eine Mehrzahl von Datenzielschnittstellen (121-kl) umfasst, wobei die Datenzielschnittstellen (121-kl) unterschiedliche Datenzugriffsrechte für unterschiedliche Datenverbraucher (123) aufweisen,
das Gateway (130) angepasst ist, um ein computerimplementiertes Verfahren (300) nach einem der Ansprüche 1 bis 7 durchzuführen.

## Revendications

1. Procédé mis en oeuvre par ordinateur (300) destiné à transmettre des données entre un premier système technique (110-n) et un second système technique (120-k), le premier système (110-n) étant un système de source de données qui comprend une pluralité d'interfaces de source de données (111-nm), et le second système technique (120-k) étant un système de destination de données qui comprend une pluralité d'interfaces de destination de données (121-kl), dans lequel les interfaces de destination de données (121-kl) ont différents droits d'accès aux données pour différents consommateurs de données (123), le procédé (300) comprenant :
la réception (310), par une passerelle (130), à partir du premier système technique (110-n), d'un ou plusieurs paquets de données
(115-n) formatés de manière à ce que des données d'au moins deux des types de données suivants puissent être dérivées :
• des métadonnées (#s) indiquant une interface de source de données particulière (111-nm) du système de source de données (110-n),
• des données de destination (#d) indiquant une interface de destination de données particulière (121-kl) du second système technique (120-k), et
• des données de contenu (#c) à stocker par le second système technique (120-k) au niveau de l'interface de destination de données particulière (121-kl) ;
l'application (320), par la passerelle (130), de règles prédéfinies, les règles dérivant des données des au moins deux types de données
(#s, #d, #c), et l'identification d'une première action : qui consiste soit à acheminer (331) le ou les paquets de données (115) vers l'interface de destination des données particulière (121-kl) du second système technique (120-k), soit à empêcher (332) l'acheminement, et
en fonction de la première action et des données qui ont été dérivées, le déclenchement (340), par la passerelle (130), d'une ou plusieurs secondes actions (350) à effectuer ultérieurement avec le ou les paquets de données (115),
le procédé (300) étant mis en oeuvre par la passerelle (130) qui utilise un moteur de règles (132), dans lequel le moteur de règles (132) met en oeuvre les règles prédéfinies de sorte que la première action est identifiée comme étant un empêchement (332), dès lors que l'une quelconque des conditions suivantes est satisfaite :
dans un intervalle de temps prédéfini, la passerelle (130) reçoit une quantité numérique de paquets de données particuliers (115), la quantité numérique dépassant un seuil prédéterminé, la condition étant appliquée aux paquets de données (115) dont les métadonnées indiquent une interface de source de données particulière (111-nm), aux paquets de données (115) dont les métadonnées indiquent une interface de destination de données particulière (121-kl), ou à une combinaison de ceux-ci :
la passerelle (130) reçoit un premier paquet de données (115-1) et un second paquet de données (115-2) ayant des données de destination identiques (#d) et ayant des données de contenu (#c) dans une première partie et dans une seconde partie qui sont complémentaires l'une de l'autre en ce qui concerne un contenu global, dans lequel lorsque la première action consiste en l'empêchement (332), la ou les secondes actions (350) comprennent la mise en mémoire tampon du paquet de données (115) dans un stockage tampon (140), dans lequel la seconde action supplémentaire (350) consiste à acheminer le paquet de données (115) vers l'interface de destination de données particulière (121-kl) si un nombre prédéterminé de paquets de données (115) avec des attributs et des valeurs d'attributs égaux ont été reçus au cours d'un intervalle de temps prédéterminé, choisis parmi ce qui suit :
les paquets de données (115) provenant d'une source ou d'un fournisseur d'informations particulier,
les paquets de données (115) indiquant que la source est un composant qui est un moteur ou une pompe,
les paquets de données (115) indiquant qu'un composant d'une machine industrielle est en cours d'utilisation,
les paquets de données (115) indiquant la source dans une hiérarchie de composants de machine, ou
les paquets de données (115) indiquant une relation avec un certificat.

2. Procédé (300) selon la revendication 1, dans lequel le moteur de règles (132) met en oeuvre la quantité numérique comme un nombre prédéfini de paquets de données particuliers (115), ou met en oeuvre la quantité numérique comme une augmentation prédéfinie du nombre de paquets de données particuliers (115).

3. Procédé (300) selon la revendication 1, dans lequel la ou les secondes actions (350) sont choisies parmi ce qui suit :
la journalisation du nombre de paquets de données (115) ; et
l'établissement de statistiques concernant la transmission des paquets de données (115).

4. Procédé (300) selon l'une quelconque des revendications précédentes, dans lequel, pendant l'exécution de l'étape d'application (320) de règles prédéfinies, la dérivation de données des au moins deux types de données échoue, la première action consiste en l'acheminement (331) du paquet de données (115) et la ou les secondes actions (350) sont choisies parmi ce qui suit :
la journalisation du nombre de paquets de données (115), et
l'établissement de statistiques concernant la transmission des paquets de données (115).

5. Procédé (300) selon la revendication 1, mis en oeuvre par une passerelle (130) qui utilise un moteur de règles (132), dans lequel le moteur de règles (132) met en oeuvre les règles prédéfinies de sorte que la première action est identifiée comme étant l'acheminement (331), dès lors que l'une quelconque des conditions suivantes est satisfaite :
la passerelle (130) reçoit un ou plusieurs paquets de données particuliers (115) avec des métadonnées (#s) qui sont enregistrées sur une liste blanche accessible au moteur de règles (132) ; et
la passerelle (130) reçoit un ou plusieurs paquets de données particuliers (115) mais ne parvient pas à dériver des données des au moins deux types de données.

6. Procédé (300) selon l'une quelconque des revendications précédentes, réalisé par une passerelle (130-n) qui est déployée sur le premier système technique (110-n).

7. Procédé selon l'une quelconque des revendications précédentes, avec l'étape supplémentaire d'interaction avec un utilisateur administrateur de flux de données (150) pour fournir une règle particulière qui est une règle pour l'étape d'application (320) pour identifier la première action (351, 352) ou qui est une règle qui commande la ou les secondes actions (350).

8. Produit programme d'ordinateur, qui lorsqu'il est chargé dans la mémoire d'un ordinateur et exécuté par au moins un processeur de l'ordinateur, - amène l'ordinateur à réaliser les étapes du procédé mis en oeuvre par ordinateur selon l'une quelconque des revendications 1 à 7.

9. Passerelle (130) adaptée pour être couplée en communication entre un premier système technique (110-n) et un second système technique (120-k) afin de transmettre des données entre ces systèmes techniques, le premier système (110-n) étant un système de source de données qui comprend une pluralité d'interfaces de source de données (111-nm), et le second système technique (120-k) étant un système de destination de données qui comprend une pluralité d'interfaces de destination de données (121-kl), dans lequel les interfaces de destination de données (121-kl) ont différents droits d'accès aux données pour différents consommateurs de données (123),
la passerelle (130) étant adaptée pour réaliser un procédé mis en oeuvre par ordinateur (300) selon l'une quelconque des revendications 1 à 7.
